# EUROPÄISCHE PATENTSCHRIFT

(11) **EP 1 825 062 B1**
(45) Veröffentlichungstag und Bekanntmachung des Hinweises auf die Patenterteilung: **12.03.2008**
(21) Anmeldenummer: 04803479.7
(22) Anmeldetag: 03.12.2004
(51) Int. Cl.: E01B 29/28, B23P 19/06

(54) **SCHRAUBMASCHINE**
COACH SCREW DRIVER
TIREFONNEUSE

(43) Veröffentlichungstag der Anmeldung: 29.08.2007
(73) Patentinhaber: Robel Bahnbaumaschinen GmbH, 83395 Freilassing (DE)
(72) Erfinder: WIDLROITHER, Otto, 83395 Freilassing (DE)
(86) Internationale Anmeldenummer: PCT/EP2004/013752
(87) Internationale Veröffentlichungsnummer: WO 2006/058552

(56) Entgegenhaltungen:
- EP-A- 0 679 762
- EP-A- 0 761 881
- DE-A1- 2 637 954
- DE-A1- 2 943 938
- DE-U1- 9 407 064
- RU-C2- 2 216 625

## Beschreibung

Die Erfindung betrifft eine Schraubmaschine zum Anziehen bzw. Lösen von Schienenbefestigungsschrauben mit einem auf einem Gleis abrollbaren, Handgriffe für ein Verschieben aufweisenden Maschinenrahmen, einem Verbrennungsmotor und einer Kupplung zur Übertragung eines Drehmomentes auf einen Schraubkopf sowie mit einer Einrichtung zur Drehmomentbegrenzung

Derartige auf einem Gleis abrollbare und von einer Bedienungsperson verschiebbare Schraubmaschine sind in vielfachen Varianten bekannt, insbesondere hinsichtlich der Kupplung und der Einrichtung zur Begrenzung des Drehmomentes. Diese ist besonders wichtig, da das Anzugsmoment für die Schrauben exakt und für alle Befestigungen konstant sein soll.

Gemäß DE 12 40 108 oder DE 26 37 954 ist eine durch Federdruck belastbare Rutschkupplung bekannt. Der Federdruck ist durch eine Anschlagschraube eines Kupplungshebels veränderbar. Damit ist jedoch kein exaktes Drehmoment erzielbar.

Eine durch DE 29 43 938 bekannte hydraulische Schraubmaschine ermöglicht zwar eine relativ genaue Drehmomentbegrenzung, ist jedoch durch das höhere Gewicht unhandlich.

Durch US 2 151 953 ist zwischen einem krafteinleitenden Flansch und einem Abtriebsflansch ein sich unter Krafteinwirkung veränderndes elastisches Medium vorgesehen. Das Drehmoment kann an einer Skala abgelesen werden. Damit ist jedoch die Genauigkeit des effektiv erzielten Anzugsmomentes von der Geschicklichkeit und Konzentration der Bedienungsperson abhängig.

Gemäß DD 135 510 werden zwei Hydraulikpumpen mit unterschiedlicher Förderleistung eingesetzt.

Aus DE 76 07 578 U sind mehrere einschwenkbare Anschlagvorrichtungen vorgesehen, die den Weg eines Schalthebels für die Wahl des Drehmomentes begrenzen.

Die Aufgabe der vorliegenden Erfindung liegt nun in der Schaffung einer Schraubmaschine der gattungsgemäßen Art, mit der eine exakte und einfache Steuerung des Drehmomentes durch eine Bedienungsperson möglich ist.

Erfindungsgemäß wird diese Aufgabe mit einer Schraubmaschine der eingangs genannten Art dadurch gelöst, dass ein vom Verbrennungsmotor antreibbarer Stromgenerator und als Kupplung eine von diesem mit elektrischem Strom versorgbare, elektromagnetisch schaltbare Reibkupplung vorgesehen sind, und die Einrichtung zur Drehmomentbegrenzung als von einer Bedienungsperson verstellbares, den Strom zur Betätigung der Reibkupplung veränderndes Steuerelement ausgebildet ist.

Durch entsprechende Verstellung des Potentiometers relativ zu einer das jeweilige Drehmoment anzeigenden Skala ist das geforderte Anzugsmoment besonders exakt und auch für die Bedienungsperson sehr einfach einstellbar. Die Kombination eines Stromgenerators mit einer von diesem versorgbaren elektromagnetischen Kupplung hat auch den besondern Vorteil, dass sowohl der konstruktive Aufwand als auch die - für eine händisch zu verschiebende Maschine entscheidende - Erhöhung der Gesamtmasse sehr gering ist.

Weitere Vorteile und Ausbildungen der Erfindung ergeben sich aus den weiteren Ansprüchen und der Zeichnung.

Im folgenden wird die Erfindung anhand eines in der Zeichnung dargestellten Ausführungsbeispieles näher beschrieben.
Es zeigen:
- Fig. 1: eine Seitenansicht einer Schraubmaschine, und
- Fig. 2: ein vereinfachtes Schaltbild.

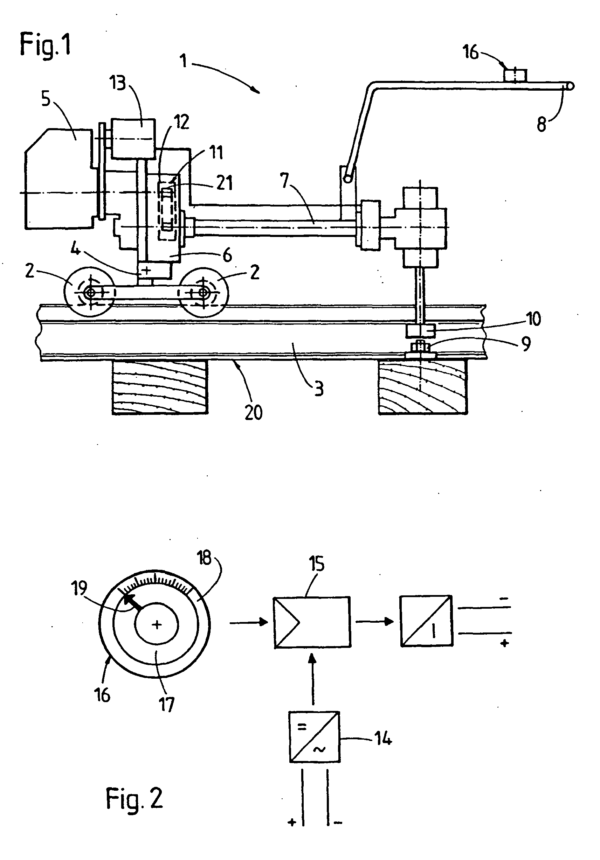

Eine in Fig. 1 dargestellte Schraubmaschine 1 weist einen über Rollen 2 auf einer Schiene 3 eines Gleises 20 verfahrbaren Maschinenrahmen 4 auf. Dieser ist mit einem Verbrennungsmotor 5, einem Getriebe 6 einer Antriebswelle 7 und Handgriffen 8 zum Verschieben der Schraubmaschine 1 verbunden. Zum Anziehen bzw. Lösen einer Schienenbefestigungsschraube 9 ist ein durch die Antriebswelle 7 in Rotation versetzbarer Schraubkopf 10 vorgesehen.

Zwischen Verbrennungsmotor 5 und einem Getriebe ist als Einrichtung 11 zur Drehmomentbegrenzung eine elektromagnetisch schaltbare Reibkupplung 12 vorgesehen. Zur Stromversorgung dient ein vom Verbrennungsmotor 5 angetriebener Stromgenerator 13, dessen Ausgangsleitung mit einem Gleichrichter 14 (Fig. 2) zur Umformung von Wechsel- in Gleichstrom in Verbindung steht. Der Gleichstrom wird einem Verstärker und Spannungsregler 15 zugeführt, dessen Ausgangsstrom - zur Beaufschlagung einer integrierten Magnetspule 21 der Reibkupplung 12 - durch ein am Handgriff 8 befestigtes, als Potentiometer ausgebildetes Steuerelement 16 in Form eines Drehknopfes 17 veränderbar ist. Diesem ist eine Skala 18 und ein das jeweilige maximale Drehmoment der als Lamellenkupplung ausgebildeten Reibkupplung 12 anzeigender Zeiger 19 zugeordnet. Die Reibkupplung 12 läuft in einem permanenten Ölbad, um das eingestellte Drehmoment exakt reproduzieren zu können.

## Patentansprüche

1. Schraubmaschine zum Anziehen bzw. Lösen von Schienenbefestigungsschrauben (9) mit einem auf einem Gleis (20) abrollbaren, Handgriffe (8) für ein Verschieben aufweisenden Maschinenrahmen (4), einem Verbrennungsmotor (5) und einer Kupplung zur Übertragung eines Drehmomentes auf einen Schraubkopf (10) sowie mit einer Einrichtung (11) zur Drehmomentbegrenzung, **dadurch gekennzeichnet, dass** ein vom Verbrennungsmotor (5) antreibbarer Stromgenerator (13) und als Kupplung (12) eine von diesem mit elektrischem Strom versorgbare, elektromagnetisch schaltbare Reibkupplung (12) vorgesehen sind, und die Einrichtung (11) zur Drehmomentbegrenzung als von einer Bedienungsperson verstellbares, den Strom zur Betätigung der Reibkupplung (12) veränderndes Steuerelement (16) ausgebildet ist.

2. Schraubmaschine nach Anspruch 1, **dadurch gekennzeichnet, dass** der Stromgenerator (13) zur Erzeugung von Wechselstrom ausgebildet und ein Gleichrichter (14) zur Umwandlung des Wechselstromes in einen die Reibkupplung (12) schaltbaren Gleichstrom sowie ein Verstärker und Spannungsregler (15) vorgesehen sind.

3. Schraubmaschine nach Anspruch 1 oder 2, **dadurch gekennzeichnet, dass** die Reibkupplung (12) als Lamellenkupplung mit integrierter Magnetspule (21) ausgebildet ist.

## Claims

1. A screwing machine for tightening or loosening rail fastening screws (9), including a machine frame (4) designed to roll on a track (20) and possessing handle bars (8) for displacement, an internal combustion engine (5), and a coupling for transmitting a torque to a screw head (10), and also including a device (11) for torque limitation, **characterized in that** an electric generator (13) is provided which can be driven by the internal combustion engine (5), and a coupling (12) is provided in the shape of an electromagnetically switchable friction clutch (12) which may be supplied with electrical power by said electric generator, and the device (11) for torque limitation is designed as a control element (16) which is adjustable by an operator and changes the current for actuating the friction clutch (12).

2. A screwing machine according to claim 1, **characterized in that** the electric generator (13) is designed for producing alternating current, and a rectifier (14) for transforming the alternating current into direct current able to switch the friction clutch (12) is provided as well as an amplifier and voltage regulator (15).

3. A screwing machine according to claim 1 or 2, **characterized in that** the friction clutch (12) is designed as a multiple disk clutch with an integrated solenoid (21).

## Revendications

1. Tirefonneuse pour visser ou dévisser des tirefonds (9), comprenant un châssis de machine (4) pouvant rouler sur une voie (20), présentant des poignées (8) pour son coulissement, un moteur à combustion interne (5) et un embrayage pour transmettre un couple à une tête de vis (10), ainsi qu'un dispositif (11) pour limiter le couple, **caractérisée en ce que** l'on prévoit un générateur de courant (13) pouvant être entraîné par le moteur à combustion interne (5) et, en tant qu'embrayage (12), un embrayage à friction (12) pouvant être alimenté par celui-ci en courant électrique et commutable de manière électromagnétique, le dispositif (11) pour la limitation du couple étant réalisé sous forme d'élément de commande (16) réglable par un opérateur, faisant varier le courant pour l'actionnement de l'embrayage à friction (12).

2. Tirefonneuse selon la revendication 1, **caractérisée en ce que** le générateur de courant (13) est réalisé pour produire un courant alternatif et **en ce que** l'on prévoit un redresseur (14) pour convertir le courant alternatif en courant continu pouvant commuter l'embrayage à friction (12) ainsi qu'un amplificateur et un régulateur de tension (15).

3. Tirefonneuse selon la revendication 1 ou 2, **caractérisée en ce que** l'embrayage à friction (12) est réalisé sous forme d'embrayage multidisques avec une bobine magnétique intégrée (21).
